# EUROPÄISCHE PATENTANMELDUNG

(11) **EP 0 639 532 A2**
(43) Veröffentlichungstag der Anmeldung: **22.02.1995**
(21) Anmeldenummer: 94111367.2
(22) Anmeldetag: 21.07.1994
(51) Int. Cl.: C02F 1/48

(54) **Elektronischer Kalkwandler**

(30) Priorität: 19.08.1993 DE 4327858
(71) Anmelder: RUCKELSHAUSEN WASSERTECHNIK AKTIENGESELLSCHAFT, D-64319 Pfungstadt (DE)
(72) Erfinder: Schelten-Peterssen, Bernhard, D-79664 Wehr (DE); Seita, Werner, D-64372 Ober-Ramstadt (DE); Ruckelshausen, Henning, D-64319 Pfungstadt (DE)
(74) Vertreter: Katscher, Helmut, Dipl.-Ing.

(57) **Zusammenfassung**

Ein durch Software gesteuerter elektronischer Kalkwandler beeinflußt das Härtebildner enthaltende Wasser durch elektrische Impulse, die durch Elektroden an das durchströmende Wasser übertragen werden. Der elektronische Kalkwandler ermöglicht es, eine durchfluß- und härteabhängige oder auch unabhängige Behandlung des Wassers in einem weiten Rahmen bei frei wählbaren Parametern durchzuführen.

## Beschreibung

Die Erfindung betrifft einen elektronischen Kalkwandler nach dem Oberbegriff des Patentanspruchs 1.

Elektronische Kalkwandler, die auch als elektronische Kalkwasserbehandler bezeichnet werden, dienen zur Beeinflussung von Härtebildnern im Wasser, um Ablagerungen zu vermindern. Derartige Kalkwandler sind in zahlreichen Ausführungsformen in der Literatur und in Patentschriften beschrieben, so daß es sich erübrigt, hier nochmal darauf einzugehen.

Die Beeinflussung des Härtebildner enthaltenden Wassers erfolgt durch elektrische Impulse, die in der Vorrichtung durch Elektroden an das durchströmende Wasser übertragen werden. Bei der Behandlung der im Wasser enthaltenden Härtebildner werden hauptsächlich Calciumcarbonat und Magnesiumcarbonate derart beeinflußt, daß sich diese nach Überschreitung des Lösligkeitsproduktes in wesentlich geringerem Maße an Oberflächen anlagern; stattdessen können diese Stoffe mit dem strömenden Wasser aus den Installationen ausgetragen werden.

Herkömmliche elektronische Kalkwandler arbeiten mit Festparameteren und können daher nur bei ganz bestimmten Wasserzusammensetzungen optimal arbeiten.

Aufgabe der Erfindung ist es daher, einen elektronischen Kalkwandler der eingangs genannten Gattung so auszubilden, daß eine rasche und einfache, hinsichtlich der Wirkungsweise optimale Anpassung an unterschiedliche Wasserzusammensetzungen ermöglicht wird, so daß für jeden Einsatzbereich eine optimale Wirkung erzielt werden kann.

Diese Aufgabe wirde mit den kennzeichnenden Merkmalen des Patentanspruchs 1 gelöst.

Der durch Software gesteuerte elektronische Kalkwandler erlaubt es, eine sowohl durchfluß- und härteabhängige als auch unabhängige Behandlung des Wassers in einem weiten Rahmen bei frei wählbaren Parametern durchzuführen.

Im Gegensatz zu Kalkwandlern, die mit Festparametern arbeiten, können beim erfindungsgemäßen Kalkwandler alle auf die Behandlung der Härtebildner Einfluß nehmenden Parametern über die Software-Programmierung eines Microcontrollers festgelegt werden. Wenn erforderlich, können dynamische Parameterveränderungen, wie Wobbeln von Impulsfrequenzen, Elektrodenstromstärken und Spannungen erzeugt werden.

Beim erfindungsgemäßen elektronischen Kalkwandler lassen sich durch reine Software-Änderung die Impulsform, die Impulsfolge und/oder die Tastzeiten stufenlos verändern. Ebenso können die Impulsfolge und/oder Impulshöhe erforderlichenfalls gewobbelt werden. Dadurch wird es möglich, den Kalkwandler optimal an die jeweilige Wasserqualität anzupassen und ebenso neuen Erkenntnissen über den Wirkungsmechanismus der elektronischen Kalkwasserbehandlung Rechnung zu tragen, ohne daß hierfür eine Hardware-Änderung nötig wird.

Die Leitfähigkeit kann über den Behandlungskammerwiderstand gemessen und auf einer Anzeigeeinrichtung, vorzugsweise einem Flüssigkristall-Display angezeigt werden. Zur Umrechnung des gemessenen Kammerwiderstands in die Einheit der Leitfähigkeit wird das Stromsignal permanent abgefragt und über den Kammerfaktor berechnet. Ein Algorithmus mit abgespeicherten Korrekturtabellen sorgt dafür, daß die immer vorhandenen Meßunsicherheiten, wie Temperaturveränderungen usw., minimiert werden, um so eine zuverlässige Leitfähigkeitsanzeige auf dem Display zu ermöglichen.

Der Gerätetyp, der Betriebszustand, die Betriebsstunden, eine etwaige Störung und die Art der Störung werden ebenfalls auf dem Display angezeigt. Bei Störung blinkt das Display, und über eine Relais mit potentialfreien Kontakten kann der Zustand des Gerätes, d.h. Funktion oder Störung, fernangezeigt werden. Alle Display-Daten bleiben auch bei Stromausfall erhalten.

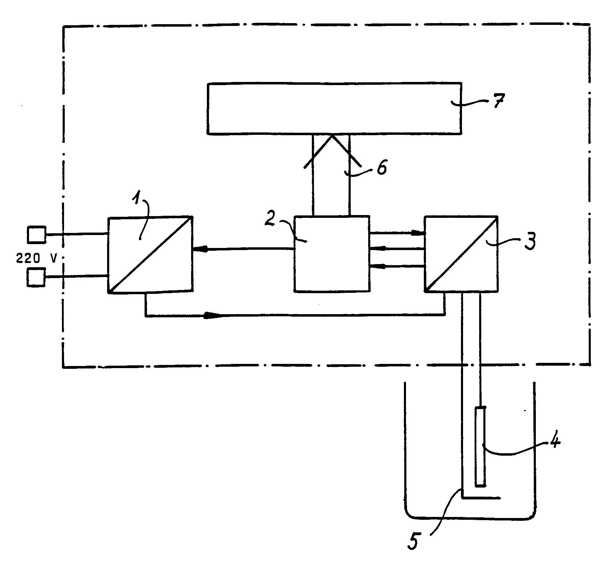

Die Zeichnung zeigt ein Blockschaltbild eines elektronischen Kalkwandlers.

Ein Netzteil 1 dient der Stromversorgung eines Leistungsteils 2, das über Elektroden 3,4 elektrische Impulse an das durchströmende Wasser abgibt. Ein Microcontroller 5 stellt die zentrale Steuereinheit dar und liefert über einen 8-Bit-Bus 6 Signale an eine beispielsweise als Flüssigkristall-Display ausgeführte Anzeigeeinrichtung 7.

## Patentansprüche

1. Elektronischer Kalkwandler, bei dem elektrische Impulse durch Elektroden an das durchströmende Wasser übertragen werden, dadurch gekennzeichnet, daß durch reine Software-Änderung die Impulsform, die Impulshöhe, die Impulsfolge und/oder die Tastzeiten stufenlos veränderbar sind.

2. Elektronischer Kalkwandler nach Anspruch 1, dadurch gekennzeichnet, daß die Impulsform und/oder Impulshöhe gewobbelt werden.

3. Elektronischer Kalkwandler nach Anspruch 1 oder 2, dadurch gekennzeichnet, daß die Inpulsfrequenz, die Elektrodenstromstärke und/oder die Spannung gewobbelt werden.

4. Elektronischer Kalkwandler nach einem der Ansprüche 1 bis 3, dadurch gekennzeichnet, daß die Leitfähigkeit über den Behandlungskammerwiderstand gemessen und auf einer Anzeigeeinrichtung angezeigt wird.

5. Elektronischer Kalkwandler nach Anspruch 4, dadurch gekennzeichnet, daß die Anzeigeeinrichtung ein Flüssigkristall-Display ist.

6. Elektronischer Kalkwandler nach Anspruch 4, dadurch gekennzeichnet, daß das Stromsignal in der Behandlungskammer permanent abgefragt und über den Kammerfaktor berechnet wird.
